# EUROPÄISCHE PATENTANMELDUNG

(11) **EP 3 244 089 A1**
(43) Veröffentlichungstag der Anmeldung: **15.11.2017**
(21) Anmeldenummer: 16465510.2
(22) Anmeldetag: 12.05.2016
(51) Int. Cl.: F16F 3/02, F16F 1/02

(54) **FEDERELEMENT**

(71) Anmelder: Continental Automotive GmbH, 30165 Hannover (DE)
(72) Erfinder: Maftei, Alexandru, 700560 Iasi (RO)
(74) Vertreter: Büchner, Jörg

(57) **Zusammenfassung**

Es wird ein Federelement, bestehend aus einem 1. Federteil (1) mit einem 1. Federkraftverlauf (ΔF1) über einen 1. Abschnitt (L1) des Federwegs und in Federwegrichtung (F) hinter diesem 1. Federteil ein 2. Federteil (2) mit einem 2. Federkraftverlauf (ΔF2) über einen 2. Abschnitt (L2) des Federwegs vorgestellt, wobei der 2. Federkraftverlauf vom 1. Federkraftverlauf abweicht. Vorzugsweise sind das 1. Federteil (1) und das 2. Federteil starr miteinander verbunden oder sogar einstückig gefertigt.

Vorzugsweise weist der 1. Federkraftverlauf (ΔF1) des 1. Federteils eine zumindest annähernd lineare Zunahme der Federkraft über den 1. Abschnitt des Federwegs auf. Der 2. Federkraftverlauf (ΔF2) des 2. Federteils (2) hat einen demgegenüber steileren Anstieg der Federkraft im 2. Abschnitt des Federwegs bis zu einem Maximalpunkt (Lmax) innerhalb des 2. Abschnitts des Federwegs und sinkt im nachfolgenden Abschnitt die Federkraft unter die Kraft (Fmax) am Maximalpunkt (Lmax) ab.

## Beschreibung

Die Erfindung betrifft ein Federelement gemäß dem Oberbegriff von Anspruch 1.

Die Aufgabe der vorliegenden Erfindung ist es, ein Federelement mit einer speziellen Federkraftcharakteristik zu erzeugen, wie es beispielsweise für die Erzeugung einer haptischen Rückkopplung mit einem sogenannten "Kick-Down", also eine übertretbaren Höchstkraft gewünscht wird, wie beispielsweise bei Pedalen mit haptischer Rückkopplung.

Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass das Federelement neben einem 1. Federteil mit einem 1. Federkraftverlauf über einen 1. Abschnitt des Federwegs in Federwegrichtung hinter diesem 1. Federteil ein 2. Hinterteil mit einem 2. Federkraftverlauf über den sich anschließenden 2. Abschnitt des Federwegs aufweist, wobei der 2. Federkraftverlauf vom 1. Federkraftverlauf abweicht.

Dabei sind vorzugsweise das 1. und 2. Federteil starr miteinander verbunden oder sogar einstückig gefertigt.

Vorzugsweise weist der 1. Federkraftverlauf des 1. Federteils eine zumindest annähernd lineare Zunahme der Federkraft über den 1. Abschnitt des Federwegs auf und hat der 2. Federkraftverlauf einen den gegenüber steileren Anstieg der Federkraft im 2. Abschnitt des Federwegs bis zu einem Maximalpunkt innerhalb des 2. Abschnitts des Federwegs aufweist und im nachfolgenden Abschnitt die Federkraft unter die Kraft am Maximalpunkt absinkt.

Zudem werden ein besonders bevorzugtes Verfahren zur Herstellung des Filterelements sowie eine geeignete Verwendung angegeben.

Die Erfindung wird nachfolgend anhand von Ausführungsbeispielen und Figuren näher erläutert werden. Es zeigen:
Figur 1: Ausführungsbeispiel eines Federelements mit 2 Federteilen mit unterschiedlicher Charakteristik
Figur 2: Federkraftverlauf für ein bevorzugtes Federelement
Figur 3: Grundform des Federelements vor der Verformung
Figur 4: Einbringen der 1. Biegung in den 2. Rechteckabschnitt

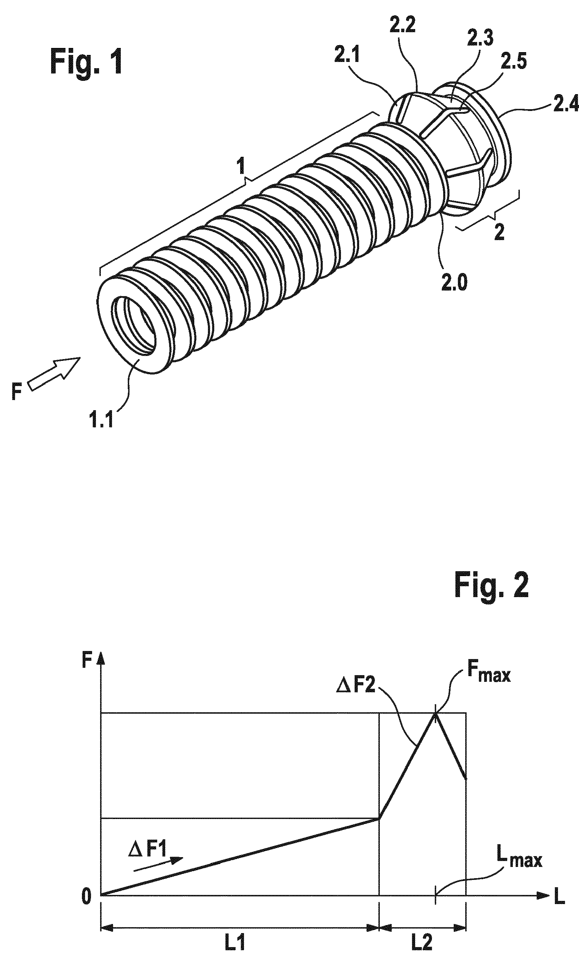

Wie in Figur 1 in der dreidimensionalen Darstellung eines noch ungespannten Federelements gut zu erkennen, besteht das Federelement aus einem 1. Federteil in Form einer Spiralfeder und einem in Federkraftrichtung F dahinter angeordneten 2. Federteil 2 mit einer demgegenüber abweichenden Formgebung. So weist das 2. Federteil 2 eine senkrecht zur Federwegrichtung F radial nach außen gerichtete Ausbeutung 2.2 der Federabschnitte 2.1 ,2.3, ... auf, wobei die einzelnen Federabschnitte durch parallel zur Federwegrichtung angeordnete Schlitze 2.5 im mittleren Bereich voneinander getrennt sind, jedoch einen gemeinsamen Übergangsbereich 2.0 zur Spiralfeder hin als auch einen gemeinsamen Endbereich 2.4 aufweisen.

Figur 2 skizziert den besonders bevorzugten erfindungsgemäßen Federkraftverlauf dieses besonders bevorzugten Federelements. Aus der entspannten Nulllage des Federelements weist der 1. Federkraftverlauf des 1. Federteils eine zumindest annähernd lineare Zunahme (ΔF1) der Federkraft über den 1. Abschnitt des Federwegs auf, wie dies für Spiralfedern an sich durchaus üblich ist. Der sich anschließende 2. Federkraftverlauf des 2. Federteils (2) weist einen dem Anstieg im 1. Abschnitt gegenüber steileren Anstieg (ΔF2) der Federkraft im 2. Abschnitt des Federwegs bis zu einem Maximalpunkt (Lmax) innerhalb des 2. Abschnitts des Federwegsauf und sinkt im nachfolgenden Abschnitt die Federkraft unter die Kraft (Fmax) am Maximalpunkt (Lmax) ab. Daher wird dieser Maximalpunkt auch als Kick-down-Punkt bezeichnet. Es sei dabei darauf hingewiesen, dass die Längen der Abschnitte der Federwege hier weder identisch noch proportional zu den entsprechenden Längen der Federteile 1 und 2 in Federwegrichtung F gemäß Figur 1 sind und die Position des Maximalpunkt (Lmax) gerade nicht dem Maximum des Federwegs entspricht.

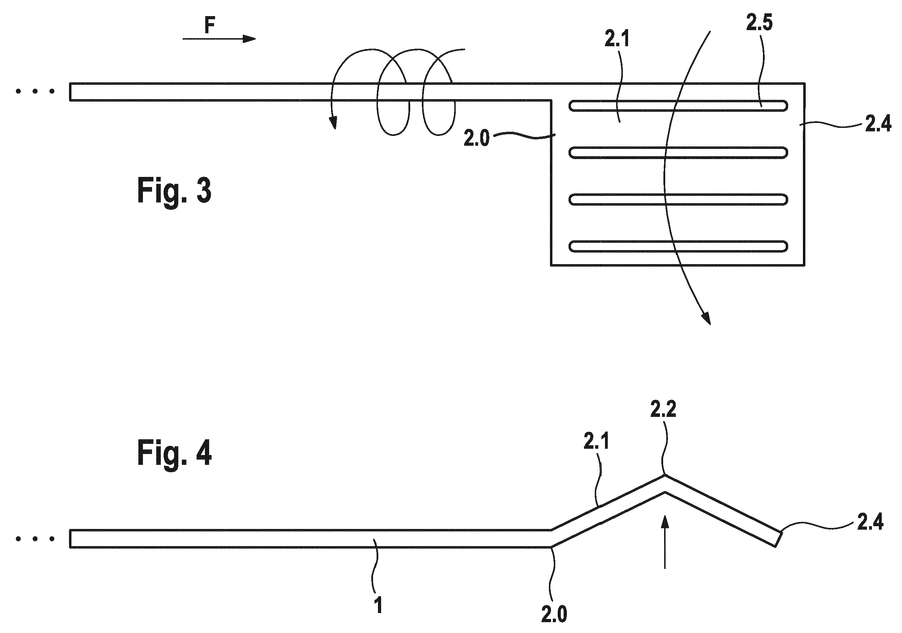

Die folgenden Figuren 3 und 4 skizzieren noch eine besonders bevorzugte Ausgestaltung zur Herstellung eines solchen Federelements einstückig aus einem zunächst ebenen Grundelement.

Das Grundelement weist einen 1. Rechteckabschnitt 1 auf, welcher in die spätere Federrichtung F eine Querschnittsbreite entsprechend dem Querschnitt der Feder, insbesondere zumindest dem 1. Federteil aufweist und eine Länge entsprechend der abgewundenen bzw. abgewickelten Gesamtlänge der 1. Spiralfeder aufweist.

Daran schließt sich ein 2. Rechteckabschnitt 2 an, welcher in die spätere Federrichtung F eine Breite entsprechend dem vorgesehenen Umfang des 2. Federteils sowie eine Mehrzahl von in Federrichtung verlaufenden Schlitzen (2.5) aufweist. Durch die Schlitze 2.5 wird der 2. Rechteckabschnitt in Federsegmente 2.1,2.3., usw. unterteilt, wobei die Schlitze in Federrichtung F nicht komplett durchgängig sind, sondern sowohl über einen Verbindungsbereich 2.0 miteinander als auch mit dem 1. Rechteckabschnitt 1 verbunden sind und vorzugsweise zudem am der Federrichtung F entgegengesetzten Ende ein gemeinsamer Endabschnitt 2.4 verbleibt.

Der 1. Rechteckabschnitt wird spiralförmig, also um eine Mittelachse zur Spiralfeder gewunden, wobei die einzelnen Windungen entgegen der Federrichtung F einen Versatz zueinander aufweisen.

Der 2. Rechteckabschnitt wird mit einer radial nach außen gerichteten Ausbeulung 2.2 senkrecht zur Federkraftrichtung F versehen und nachfolgend aufgerollt, vorzugsweise zu einer radial umlaufenden Form und zumindest punktuellen Verbindung der beiden Enden. Ein solches Federelement eignet sich besonders gut für die Verwendung in einem Pedal, insbesondere Gaspedal, mit einer haptischen Rückkopplung für ein Kraftfahrzeug. Durch die einstückige, jedoch mit 2 Federteilen mit unterschiedlicher Federcharakteristik ausgebildete Form des Federelements kann die gewünschte Federcharakteristik mit einer besonders einfach hergestellt und zu montierenden Ausgestaltung realisiert werden.

## Patentansprüche

1. Federelement, bestehend aus einem 1. Federteil (1) mit einem 1. Federkraftverlauf (ΔF1) über einen 1. Abschnitt (L1) des Federwegs, **dadurch gekennzeichnet dass**, das Federelement in Federwegrichtung (F) hinter diesem 1. Federteil ein 2. Federteil (2) mit einem 2. Federkraftverlauf (ΔF2) über einen 2. Abschnitt (L2) des Federwegs aufweist, wobei der 2. Federkraftverlauf vom 1. Federkraftverlauf abweicht.

2. Federelement nach Anspruch 1, **dadurch gekennzeichnet, dass** das 1. Federteil (1) und das 2. Federteil starr miteinander verbunden sind.

3. Federelement nach einem der vorangehenden Ansprüche, **dadurch gekennzeichnet, dass**
der 1. Federkraftverlauf (ΔF1) des 1. Federteils eine zumindest annähernd lineare Zunahme der Federkraft über den 1. Abschnitt des Federwegs aufweist und
der 2. Federkraftverlauf (ΔF2) des 2. Federteils (2) einen demgegenüber steileren Anstieg der Federkraft im 2. Abschnitt des Federwegs bis zu einem Maximalpunkt (Lmax) innerhalb des 2. Abschnitts des Federwegs aufweist und
im nachfolgenden Abschnitt die Federkraft unter die Kraft (Fmax) am Maximalpunkt (Lmax) absinkt.

4. Federelement nach einem der vorangehenden Ansprüche, **dadurch gekennzeichnet, dass** das 1. Federteil (1) eine Spiralfeder und das 2. Federteil (2) ein bistabiles Federelement ist.

5. Verfahren zur Herstellung eines Federelements nach einem der vorangehenden Ansprüche, wobei die beiden Federteile einstückig aus einem zunächst flachen Grundelement gebildet werden, wobei das Grundelement
einen 1. Rechteckabschnitt (1) aufweist, welcher in die spätere Federrichtung F eine Querschnittsbreite entsprechend dem Querschnitt der Feder und eine Länge entsprechend der abgebundenen Gesamtlänge der 1. Spiralfeder aufweist,
einen 2. Rechteckabschnitt (2) aufweist, welcher in die spätere Federrichtung F eine Breite entsprechend dem vorgesehenen Umfang des 2. Federteils sowie eine Mehrzahl von in Federrichtung verlaufenden Schlitzen (2.5) aufweist,
wobei der 1. und der 2. Rechteckabschnitt über einen Verbindungsbereich (2.0) miteinander verbunden sind und
der 1. Rechteckabschnitt zur Spiralfeder gewunden wird und der 2. Rechteckabschnitt mit einer Ausbeulung senkrecht zur Federkraftrichtung versehen und nachfolgend aufgerollt wird.

6. Pedal, insbesondere Gaspedal, mit einer haptischen Rückkopplung für ein Kraftfahrzeug mit einem Federelement nach einem der vorangehenden Ansprüche.
